# EUROPEAN PATENT APPLICATION

(11) **EP 3 671 617 A1**
(43) Date of publication of application: **24.06.2020**
(21) Application number: 18214643.1
(22) Date of filing: 20.12.2018
(51) Int. Cl.: G06Q 50/04, H02B 5/00

(54) **METHOD OF PRODUCING PARTS OF AN ELECTRIC SUBSTATION**

(71) Applicant: ABB Schweiz AG, 5400 Baden (CH)
(72) Inventor: Javora, Radek, 664 62 Hrusovany u Brna (CZ); Sekula, Robert, 30-613 Krakow (PL)
(74) Representative: Maiwald Patent- und Rechtsanwaltsgesellschaft mbH

(57) **Abstract**

The present invention relates to a method of producing parts of an electric substation. The method comprises:
providing a set of parameters for at least one internal part of an electric substation for a customer's site;
sending at least one instruction order to one or more additive manufacturing printers, wherein the at least one instruction order is based on the set of parameters;
producing by the one or more additive manufacturing printers the at least one internal part, the production comprising utilisation of the set at least one instruction order; and providing quality information on the manufactured at least one internal part.

## Description

### FIELD OF THE INVENTION

The present invention relates to a method of producing parts of an electric substation, and at least one part of an electric substation produced using such a method.

### BACKGROUND OF THE INVENTION

Electric substations (SSs) form a part of an electrical generation and distribution system. A design of an electric substation using conventional components needs to reflect the possibility for manufacturing deviation, the possibility to assemble various parts and to perform maintenance. Once all components parameters are clarified, components need to be quoted and purchased. The transport time adds into total delivery time of such components. Assembly of various parts is typically done by welding, screwing or simple mechanical assembly, once parts are available. Production of components is done at manufacturer premises and tested. Typical products used within a SS include: power transformers, instrument transformers, Medium voltage (MV) switchgears, low voltage (LV) switchgears, circuit breakers, disconnectors, switches, etc. Once manufactured and assembled, the part or product is packed and sent to the customer for assembly of a switchgear or full SS.

Thus, an electrical substation has numerous components or parts, with substation parameters defined at this component level. As such, it can be difficult to achieve short delivery timescales for components when replacement is required or when a new substation is being commissioned, or when updated parts with new parameters are required. Similarly, in the case of missing spare parts, these need to be ordered, produced and delivered, resulting in a long delivery time, which may impact a duration of a SS shutdown. This situation is exacerbated because such parts or components are not usually held in stock. Part production can take several months, as the production process can involve several suppliers/manufacturers with a number of manual assembly operations dependent on each other. This combined with the necessary transport of semi-fabricated and/or semi-assembled goods and transport to the final customer also leads to further delivery prolonged delivery timescales.

There is a need to address this issue.

### SUMMARY OF THE INVENTION

Therefore, it would be advantageous to have means to improve the production of parts of an electric substation.
The object of the present invention is solved with the subject matter of the independent claims, wherein further embodiments are incorporated in the dependent claims.

In a first aspect, there is provided a method of producing parts of an electric substation, the method comprising:
a) providing a set of parameters for at least one internal part of an electric substation for a customer's site;
e) sending at least one instruction order to one or more additive manufacturing printers, wherein the at least one instruction order is based on the set of parameters;
f) producing by the one or more additive manufacturing printers the at least one internal part, the production comprising utilisation of the set at least one instruction order; and
g) providing quality information on the manufactured at least one internal part.

In an example, the method comprises:
b) sending the set of parameters to a designer;
c) calculating by the designer at least one new design for the at least one internal part; and
d) generating the at least one instruction order, the generation comprising utilisation of the at least one new design.

In an example, step g) comprises testing the at least one internal part.

In an example, the method comprises:
h) optimising the set of parameters, the optimisation comprising utilisation of the quality information.

In an example, step f) is carried out at a substation producer site. The method then comprises delivering the at least one part to the customer's site

In an example, step f) is carried out at the customer's site.

In an example, step f) is carried out at a laboratory/testing site. The method then comprises delivering the at least one part to the customer's site

In an example, steps f) and g) are carried out simultaneously.

In an example, step g) is carried out after step f).

In an example, step g) is carried out manually.

In an example, step g) is carried out automatically by a different system to that used in step f).

In an example, in step e) the sending comprises using a secured digital protocol, and/or in step g) the providing comprises sending the quality information to the customer's site using a secured digital protocol.

In a second aspect, there is provided at least one part of an electric substation, wherein the at least one part is manufactured according to the method of the first aspect.

### BRIEF DESCRIPTION OF THE DRAWINGS

Exemplary embodiments will be described in the following with reference to the following drawings:

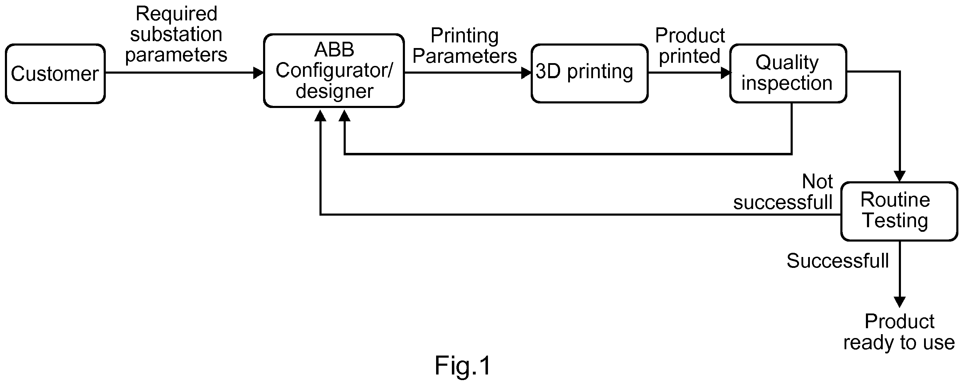

Fig. 1 shows an example of a substation part delivery and production workflow.

### DETAILED DESCRIPTION OF EMBODIMENTS

Fig. 1 shows an example of a substation part delivery and production workflow. This relates to a method of producing parts of an electric substation. The method comprises:
a) providing a set of parameters for at least one internal part of an electric substation for a customer's site;
e) sending at least one instruction order to one or more additive manufacturing printers, wherein the at least one instruction order is based on the set of parameters;
f) producing by the one or more additive manufacturing printers the at least one internal part, the production comprising utilisation of the set at least one instruction order; and
g) providing quality information on the manufactured at least one internal part.

According to an example, the method comprises:
b) sending the set of parameters to a designer;
c) calculating by the designer at least one new design for the at least one internal part; and
d) generating the at least one instruction order, the generation comprising utilisation of the at least one new design.

According to an example, step g) comprises testing the at least one internal part.

According to an example, the method comprises:
h) optimising the set of parameters, the optimisation comprising utilisation of the quality information.

According to an example, step f) is carried out at a substation producer site. The method then comprises delivering the at least one part to the customer's site

According to an example, step f) is carried out at the customer's site.

According to an example, step f) is carried out at a laboratory/testing site. The method then comprises delivering the at least one part to the customer's site

According to an example, steps f) and g) are carried out simultaneously.

According to an example, step g) is carried out after step f).

According to an example, step g) is carried out manually.

According to an example, step g) is carried out automatically by a different system to that used in step f).

According to an example, in step e) the sending comprises using a secured digital protocol, and/or in step g) the providing comprises sending the quality information to the customer's site using a secured digital protocol.

Thus, the above described method results in the manufacture of at least one part of an electric substation.

The current size and design of an electric substation is limited by the way all parts are produced and corresponds to the state of the art of its component's manufacturing as well. Thus, the described method applies a new production method that of additive manufacturing technology (e.g. 3D printing) to make the design and production of parts of an electric substation (SS) much more effective, i.e. smaller size, improved quality etc. An associated significant advantage and improvement is changing of the business model that will create totally new and advantageous business opportunities for customers by changing a traditional supply chain network and skipping a number of existing manufacturing steps. The described method utilizes for example real-time web-based printing possibilities followed by proper quality check in-situ, e.g. in the case of missing spare parts for existing installations. Web-based real-time feedback in-situ directly after printing of the printing data is conducted in order to realize an immediate quality check by the data owner (the customer or component designer) of the printed product. This is important in the sense of digital, industry 4.0 and 6Sigma proces. Thus, additive manufacturing technology that has emerged from being a new technology is used to produce various parts used in SSs.

Therefore, all or at least some products/parts used a within SS can be produced using the described method that utilizes additive manufacturing technology (3D printing). If a 3D printer is available at a manufacturer of the SS location, they can print the necessary parts needed for SS assembly and thereby avoid waiting for delivery of necessary parts from suppliers. This will significantly decrease the delivery time of a SS, especially in the case of critical components. As all the specific parts have a possibility to be 3D printed, the method can be extended even to the final customer/user, so he can himself print the SS at the final place or close to the testing facility. Thus if a customer can test the unit in his or nearby facility, a printer or set of printers for additive manufacturing steps can be placed at the customer premises and then the printing software and design can be managed as required, for example by a supplier. This dramatically decreases transport time and costs and can reflect last minute customer modifications. Whole production is then fully autonomous, without any human interaction, so the quality of products improves and at the same time quality/design for each printed unit improves.
The method can be further used in the manufacture or production of all kind of components, covering all voltage levels and environmental conditions. It can be used also in a service environment, whenever there is a need for some spare parts. A service team can then send a 3D model of that part (either by using available 3D model or by scanning the original part) to be printed on situ. After printing it is important to have a quality check of the printed part before placing it in relevant place within the SS.

The method is shown simply in Fig. 1. A customer sends SS parameters to the configurator. In case this is a totally new configuration, parameters are sent to a designer, who calculates the new design. The new or existing design is sent to the additive manufacturing printer (3D printer) or set of printers, that print some parts of the SS or even the whole SS. In order to make a product check, quality inspection needs to be done, providing feedback to the designer or configurator if the printed part should be discarded and a new piece printed or if it can be sent to routine tests and warranty then guaranteed. The product or part then needs to be routine tested in order to make sure the accuracy parameters are fulfilled and there are no dielectric issues which can lead to failures or safety issues. In an advanced approach, the whole design process can be linked with dedicated design optimisation software enabling algorithms with function goals resulting in a number of additional product benefits as minimised electrical fields, reduced weight, etc.

The quality inspection step accommodates several sensing and checking means, in order to qualify the quality of the printout / printed part. This can be done either simultaneously during printing or after the printing step is finalized.

The method described here reduces the need for SS factories/production, since the printing can be done at customer premises to decrease delivery time and transportation costs as well as necessary shut-down time of the SS (in case of service activities). The method can be used with and by sub-suppliers, i.e. a sub-supplier can send a 3D model to the factory producing the SS and the relevant part or sub-part is printed directly in that factory, providing a introduction of 3D printed parts into production of an SS. Thus some parts can be 3D printed, and some manufactured in a conventional way. However, the opportunity exists to manufacture all components using the described method, and thus full SS production can be done by 3D printing in the manufacturing factory first, with later introduction to the final customer/user. Appropriate data share between the customer, designer and printer then ensures a safe, secure and reliable data transfer for the production method.

The described method using additive manufacturing can be applied to a number of power parts used in electric SS, e.g. busbars, post insulators, bushings, poles, switchgears, etc. It can be used for the supply of their internal parts or for the supply of the whole product to the SS assembly, covering all voltage levels.

Furthermore, in the case of a fully or partly autonomous SS without people intervention, service tasks become possible or at least much easier and cheaper through utilisation of the described method. This is because the autonomous SS can have necessary spare parts made/printed within the SS itself, without the need for a person entering the SS with a new spare part. That printed spare part can be mounted in a particular place by an appropriate robotic system, or the part can be printed directly in it required final place (if space is available to allow for such printing) within the SS. This is especially beneficial for subsea or very remote installations/applications.

## Claims

1. A method of producing parts of an electric substation, the method comprising:
a) providing a set of parameters for at least one internal part of an electric substation for a customer's site;
e) sending at least one instruction order to one or more additive manufacturing printers, wherein the at least one instruction order is based on the set of parameters;
f) producing by the one or more additive manufacturing printers the at least one internal part, the production comprising utilisation of the set at least one instruction order; and
g) providing quality information on the manufactured at least one internal part.

2. Method according to claim 1, the method comprising:
b) sending the set of parameters to a designer;
c) calculating by the designer at least one new design for the at least one internal part; and
d) generating the at least one instruction order, the generation comprising utilisation of the at least one new design.

3. Method according to any of claims 1-2, wherein step g) comprises testing the at least one internal part.

4. Method according to any of claims 1-3, the method comprising:
h) optimising the set of parameters, the optimisation comprising utilisation of the quality information.

5. Method according to any of claims 1-4, wherein step f) is carried out at a substation producer site, and wherein the method comprises delivering the at least one part to the customer's site.

6. Method according to any of claims 1-4, wherein step f) is carried out at the customer's site.

7. Method according to any of claims 1-4, wherein step f) is carried out at a laboratory/testing site, and wherein the method comprises delivering the at least one part to the customer's site.

8. Method according to any of claims 1-7, wherein steps f) and g) are carried out simultaneously.

9. Method according to any of claims 1-8, wherein step g) is carried out after step f).

10. Method according to any of claims 1-9, wherein step g) is carried out manually.

11. Method according to any of claims 1-9, wherein step g) is carried out automatically by a different system to that used in step f).

12. Method according to any of claims 1-11, wherein in step e) the sending comprises using a secured digital protocol, and/or in step g) the providing comprises sending the quality information to the customer's site using a secured digital protocol.

13. At least one part of an electric substation, wherein the at least one part is manufactured according to the method of any of claims 1-12.
